# EUROPEAN PATENT SPECIFICATION

(11) **EP 3 769 598 B1**
(45) Date of publication and mention of the grant of the patent: **20.04.2022**
(21) Application number: 18910642.0
(22) Date of filing: 23.03.2018
(51) Int. Cl.: A01D 34/00, G05D 1/02, A01B 69/04, A01B 69/00

(54) **PLACEMENT POSITION NOTIFICATION SYSTEM**
SYSTEM ZUR MELDUNG EINER PLATZIERUNGSPOSITION
SYSTÈME DE NOTIFICATION DE POSITION DE PLACEMENT

(43) Date of publication of application: 27.01.2021
(73) Proprietor: HONDA MOTOR CO., LTD., Minato-ku Tokyo 107-8556 (JP)
(72) Inventor: SHIMAMURA, Hideaki, Wako-shi, Saitama 351-0193 (JP); MURO, Keiji, Wako-shi, Saitama 351-0193 (JP); KAMEYAMA, Naoki, Wako-shi, Saitama 351-0193 (JP); KANEKO, Runa, Wako-shi, Saitama 351-0193 (JP)
(74) Representative: Feller, Frank
(86) International application number: PCT/JP2018/011849
(87) International publication number: WO 2019/180950

(56) References cited:
- EP-A1- 2 926 642
- EP-A1- 3 226 019
- EP-A1- 3 237 984
- EP-A2- 2 945 037
- CN-A- 106 873 583
- JP-A- 2014 021 624
- JP-A- 2017 158 532
- JP-A- 2017 181 408
- JP-B2- 5 944 473
- JP-B2- 6 289 603
- US-A1- 2016 113 195

## Description

### [Technical Field]

The present invention relates to a placement position notification system that provides a notification of the placement positions of placement objects indicating a work target area.

### [Background Art]

Some autonomous traveling work machines that autonomously travel in a work target area recognize placement objects such as markers which are placed along the work target area, thereby traveling in the work target area (see, for example, Patent Literature 1).

### [Citation List]

### [Patent Literature]

JP 2017 158532 A relates to a placement position notification system, disclosing the preamble of claim 1. EP 2 926 642 A1 discloses an autonomous travel work system which works, regarding a work ground as a canvas and applying an arbitrary design to the work ground, according to the design.

EP 3 226 019 A1 describes a marking device for a lawn mower.

EP 3 237 984 A1 relates to robotic vehicles, such as mowing devices, and more particularly robotic vehicles that are configurable to operate within one or more areas within a parcel, while not working and/or entering one or more exclusion areas.

CN 106 873 583 A describes an autonomous work device, especially an autonomous lawnmower.

EP 2 945 037 A2 discloses a robotic lawnmower confinement system, including at least two dispenser units and a powered unit in wired connection with the at least two dispenser units.

### [Summary of Invention]

### [Technical Problem]

However, since placement positions of the markers are required to be accurate, placement work is performed by a specialist. This involves costs in the placement work and causes the inconvenience of adjusting schedules with the specialist.

Therefore, it is an object of the invention to allow placement objects such as markers to be more easily placed.

### [Solution to Problem]

The object of the invention is achieved by a placement position notification system according to claim 1. In order to achieve the above-mentioned object, one aspect of the present invention provides a placement position notification system configured to provide a notification of placement positions of placement objects that indicates a work target area of an autonomous traveling work machine. The placement position notification system includes: an information acquisition unit configured to obtain image information including the work target area; an input unit configured to receive input information corresponding to the image information and specifying the work target area; a position specifying unit configured to specify placement positions of the placement objects based on the input information; and a notification unit configured to provide a notification of the specified placement positions.

In the above configuration, the position specifying unit is preferably configured to set a contour line of the work target area based on the input information and specifies the placement positions of the placement objects based on the contour line.

In the above configuration, the position specifying unit is preferably configured to set main points indicating positions where the contour line curves and sub-points arranged at intervals on the contour line connecting the main points; and to specify the main points and sub-points as the placement positions of the placement objects.

In the above configuration, the position specifying unit is preferably configured to set the sub-points at such positions that adjacent placement objects are arranged within the visual field range of a camera which is used by the autonomous traveling work machine to detect the placement objects, at a distance for which the accuracy of being able to recognize the placement objects with the camera is a predetermined value or higher.

In the above configuration, the position specifying unit is preferably configured to compare the set contour line and a connecting line that linearly connects the specified placement positions of the placement objects; and is preferably configured to perform, if a deviation between the contour line and the connecting line is a predetermined value or more, modification processing of modifying the placement positions of the placement objects. The notification unit is preferably configured to provide a notification of the modified placement positions.

In the above configuration, the input unit is preferably configured to receive other input information that specifies an area not requiring work in the work target area; and the position specifying unit is preferably configured to set a contour line of the area not requiring work based on the other input information and to specify placement positions of the placement objects based on the contour line.

In the above configuration, the position specifying unit is preferably configured to obtain information on at least any of a building and a topography from the image information; and also to perform other modification processing of modifying the placement positions of the placement objects based on the obtained information.

In the above configuration, a control unit is preferably provided which is configured to perform: processing of causing the autonomous traveling work machine to execute verification traveling for verification of the positions of the placement objects; and processing of determining positional deviation amounts of the placement objects based on a result of the verification by the autonomous traveling work machine and causing the notification unit to provide a notification of information on the deviation amounts.

In the above configuration, the image information is map information; and the notification unit is preferably configured to display an image indicating the specified placement positions, on a map image included in the map information.

### [Advantageous Effects of Invention]

One aspect of the present invention includes: the information acquisition unit that obtains image information including a work target area; the input unit that receives input information corresponding to the image information and specifying the work target area; the position specifying unit that specifies placement positions of the placement objects based on the input information; and the notification unit that provides a notification of the specified placement positions. Thus, even a non-specialist can easily know the placement positions of the placement objects, thereby being able to easily place the placement objects.

### [Brief Description of Drawings]

[Figure 1] Figure 1 is a view showing a placement position notification system together with a robot lawn mower.
[Figure 2] Figure 2 is a block diagram of an information processing device.
[Figure 3] Figure 3 is a flowchart showing placement position specification processing.
[Figure 4] Figure 4 is a view showing a display example of a map image which is obtained by step S11.
[Figure 5] Figure 5 is a view showing a display example of a contour line which is set by step S13.
[Figure 6] Figure 6A is a view for describing the setting of main points in step S14; and Figure 6B is a view for describing the setting of sub-points in step S14.
[Figure 7] Figure 7A is a view showing a contour line L1A before modification; and Figure 7B is a view showing the contour line L1A after the modification.
[Figure 8] Figure 8 is a view provided for describing the setting of an area not requiring work.

### [Description of Embodiments]

Hereinafter, embodiments of the present invention will be described with reference to drawings.

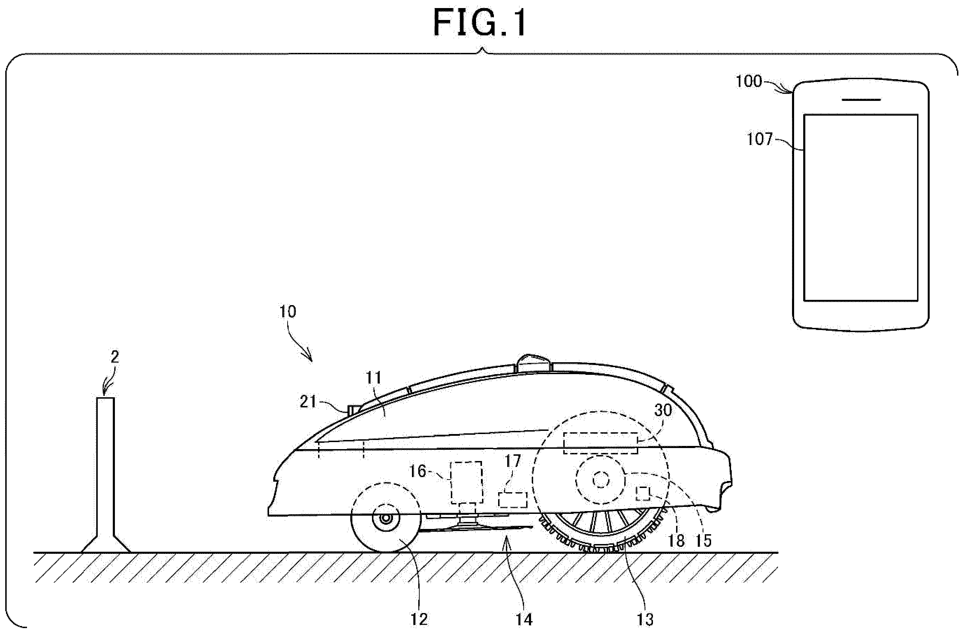

Figure 1 is a view showing a placement position notification system according to an embodiment of the present invention, together with a robot lawn mower.

A placement position notification system 1 is a system that notifies a robot lawn mower 10 of placement positions of markers 2 which indicate a work target area (hereinafter, denoted by a reference numeral 41) that is a lawn mowing area; and includes an information processing device 100 that is used by a person who places the markers 2 (hereinafter, referred to as a user).

The robot lawn mower 10 is an autonomous traveling work machine that mows lawn in the work target area 41 by autonomously traveling in the work target area 41; and is hereinafter represented as a lawn mower 10.

The lawn mower 10 includes: a housing 11; left and right front wheels 12 provided on a front of the housing 11; left and right rear wheels 13 provided on a rear of the housing 11; and a work part 14 provided at a lower center of the housing 11. The work part 14 is a cutting blade disk provided with a cutting blade and can mow lawn by the cutting blade disk being rotationally driven.

The lawn mower 10 includes in the housing 11: left and right traveling motors 15 that individually drive the left and right rear wheels 13; a work part driving motor 16 that drives the work part 14; a battery 17 that supplies operating power to each part of the lawn mower 10; a wheel speed sensor 18 that detects rotation speeds of the left and right rear wheels 13 which are driving wheels; and an electrical unit 30.

In addition, the lawn mower 10 includes a camera 21 as a sensor used for detecting placement objects. The one or a plurality of the camera 21 may be provided; for example, it may be a stereo camera constituted of two cameras.

The lawn mower 10 includes: a function of performing image analysis for a captured image of the camera 21 and extracting markers 2 in the captured image under control of the electrical unit 30, so as to specify positions of the markers 2; a function of recognizing the work target area 41 based on the positions of the markers 2; and a function of performing work (mowing) while traveling in the recognized work target area 41. The markers 2 are placement objects which are arranged along a boundary of the work target area 41 by a user or the like before the work; one example of the markers 2 is shown in Figure 1.

The lawn mower 10 of the embodiment detects the markers 2 with the camera 21, sets a virtual wire for linearly connecting the markers 2 with each other, and performs the work while traveling without going beyond this virtual wire. It should be noted that to the above-described functions of the lawn mower 10, a publicly known position detection function using the Global Positioning System (GPS) or the like and a publicly known technique described in, for example, Japanese Patent Laid-Open No. 2017-158532 described in Background are widely applicable.

The information processing device 100 is a device capable of displaying an image viewed by the user and receiving an input of a user instruction, to which a publicly known device such as a portable information processing device that can be carried by the user, a personal computer, is widely applicable. The information processing device 100 of the embodiment is a smartphone that is one kind of the portable information processing device.

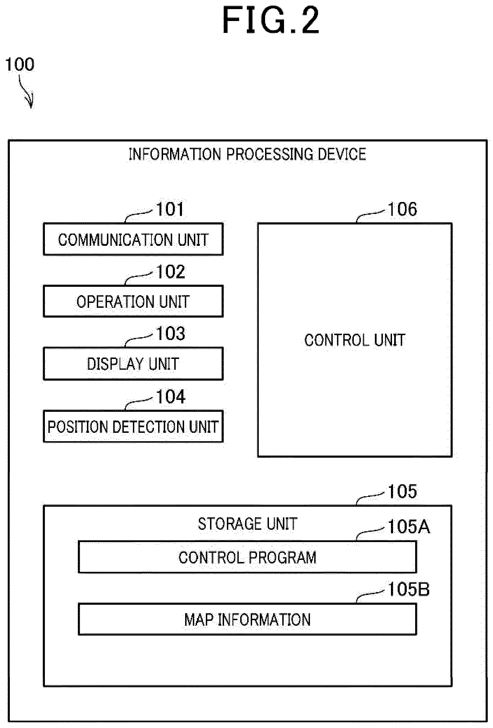

Figure 2 is a block diagram of the information processing device 100.

The information processing device 100 includes a communication unit 101, an operation unit 102, a display unit 103, a position detection unit 104, a storage unit 105, and a control unit 106. As for them, a point especially different from a commonly used smartphone is that a control program 105A applicable to this placement position notification system is stored in the storage unit 105. This control program may be either a program installed by the user or a program preinstalled in the information processing device 100.

The communication unit 101 includes a communication function for performing a data communication, short-range wireless communication, and phone call via the Internet. The operation unit 102 is an input device (corresponding to an input unit) for receiving an input of various kinds of input information from the user and includes, for example, an operation button and a touch panel. The display unit 103 is a display device that displays various kinds of information under control of the control unit 106; for example, it is a liquid crystal display device.

The position detection unit 104 is a device that detects a current position of the information processing device 100 by using the Global Positioning System (GPS) or the like.

The storage unit 105 stores the control program and various kinds of data. Although map information 105B is stored in the storage unit 105 in Figure 2, this map information 105B is data that is appropriately downloaded from outside via the communication unit 101. It should be noted that if the storage capacity of the storage unit 105 is limited, map information 105B only for a necessary area (for example, only map information 105B including the work target area 41 together with a peripheral map) may be stored in the storage unit 105. On the other hand, if there is a sufficient storage capacity in the storage unit 105, wide area map information 105B such as for a nationwide map may be stored in the storage unit 105.

The control unit 106 is constituted of a microcomputer including a central processing unit (CPU), a random access memory (RAM), a read only memory (ROM), and the like. The CPU executes the control program stored in the storage unit 105 and thereby, the control unit 106 functions as, for example, a position specifying unit that executes the placement position specification processing for specifying the placement positions of the markers 2.

It should be noted that in addition to a configuration shown in Figure 2, the information processing device 100 includes such a configuration that is commonly included in a smartphone; for example, it includes: a microphone and a speaker that allow audio input and output; and a camera capable of photographing surroundings.

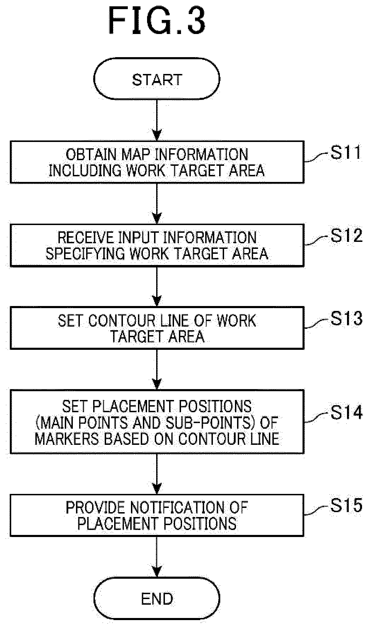

Figure 3 is a flowchart showing the placement position specification processing.

As shown in Figure 3, the placement position specification processing is performed such that map information 105B including a work target area 41 is obtained at step S11; input information specifying the work target area 41 is received at step S12; a contour line L1 of the work target area 41 is set at step S13; placement positions of markers 2 are set based on the contour line L1 at step S14; and the user is notified of the placement positions of the markers 2 at step S15. The following will more specifically describe each of steps S11 to S15.

At step S11, the control unit 106 receives an input of a position corresponding to the work target area 41 from the user through either display on the display unit 103 or audio output; detects the input position by the operation unit 102; and displays a map image including the input position on the display unit 103. For example, an address is input as a position corresponding to the work target area 41; map information 105B corresponding to the address is downloaded through the communication unit 101 and is stored in the storage unit 105; and a map image of the address is displayed by using the map information 105B. If the map information 105B corresponding to the input address has been stored in the storage unit 105, a map image of the address is displayed by using the stored map information 105B.

Thus, an information acquisition unit that obtains image information including the work target area 41 is constituted by the communication unit 101.

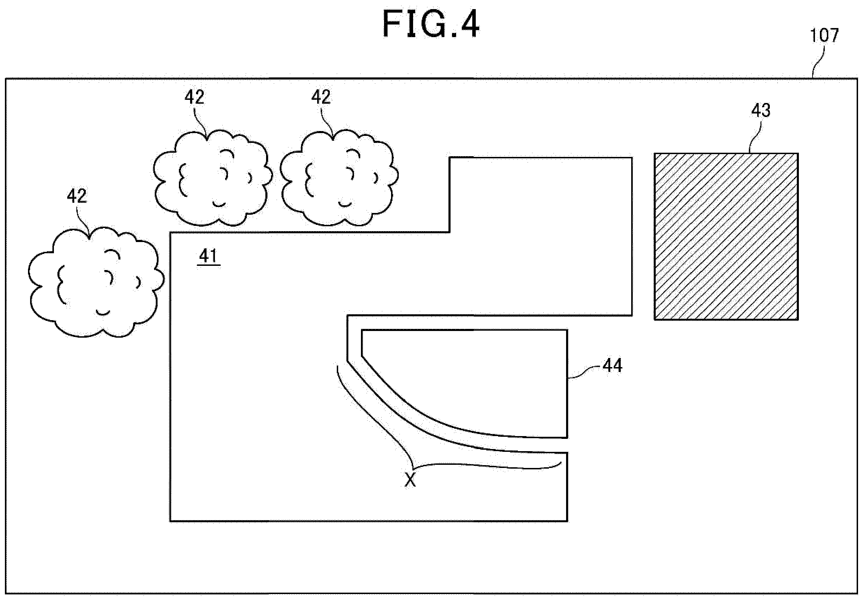

Figure 4 shows a display example of the map image which is obtained by step S11. In Figure 4, a contour of the work target area 41 is indicated by a phantom line (alternate long and two short dashes line) for convenience of description. In addition, a reference numeral 107 in Figure 4 indicates a display screen of the information processing device 100.

Display shown in Figure 4 is a view of the work target area 41 including its surroundings seen from thereabove; in which trees (denoted by a reference numeral 42), a building (denoted by a reference numeral 43), and a pond (denoted by a reference numeral 44) exist at inside and outside of the work target area 41. In addition, the contour of the work target area 41 is in a circular-arc shape of curving along the pond, near the pond.

Here, information on the trees 42, the building 43, and the pond 44 may be such that independent information for specifying the trees 42, the building 43, and the pond 44 is included in the map information 105B; alternatively, may be detected by image recognition from map information included in the map information 105B.

It should be noted that for processing in step S11, such a publicly known technique is widely applicable as a method for inputting a position by a latitude, longitude, and the like, not limited to an address; or a method for performing enlarged display of a target map from a wide area map by user's manual operation. In addition, since the user usually knows a lawn mowing area beforehand, the location of the work target area 41 can be easily specified. Furthermore, it may be possible that in consideration that there is a possibility that the user already exists in the work target area 41, a current position of the information processing device 100 is obtained by a publicly known method and map information of surroundings of the obtained position is obtained.

Yet furthermore, a configuration for obtaining the map information 105B via the communication unit 101 may not be necessarily limited thereto. For example, it may be possible that the information processing device 100 includes a medium reading unit (also referred to as a slot) capable of reading a recording medium and obtains necessary map information 105B from a recording medium in the medium reading unit.

In addition, in the embodiment, description has been made regarding a case in which an image including the work target area 41 is displayed by obtaining the map information 105B; however, it is not limited thereto and it may be possible that the control unit 106 obtains a satellite photograph including the work target area 41 by using the communication unit 101, obtains an image of the work target area 41 from the satellite photograph, and displays it. Furthermore, it also may be possible that an image drawn by the user using image software, or the like is input and this input image is displayed as an image including the work target area 41.

At step S12, the control unit 106 receives an input of a plurality of positions located on the contour of the work target area 41 from the user through either display on the display unit 103 or audio output. At step S13, the control unit 106 detects the input plurality of positions by the operation unit 102, calculates a line connecting the input plurality of positions, sets the calculated line as a contour line L1 of the work target area 41, and displays the set contour line L1 on the display unit 103.

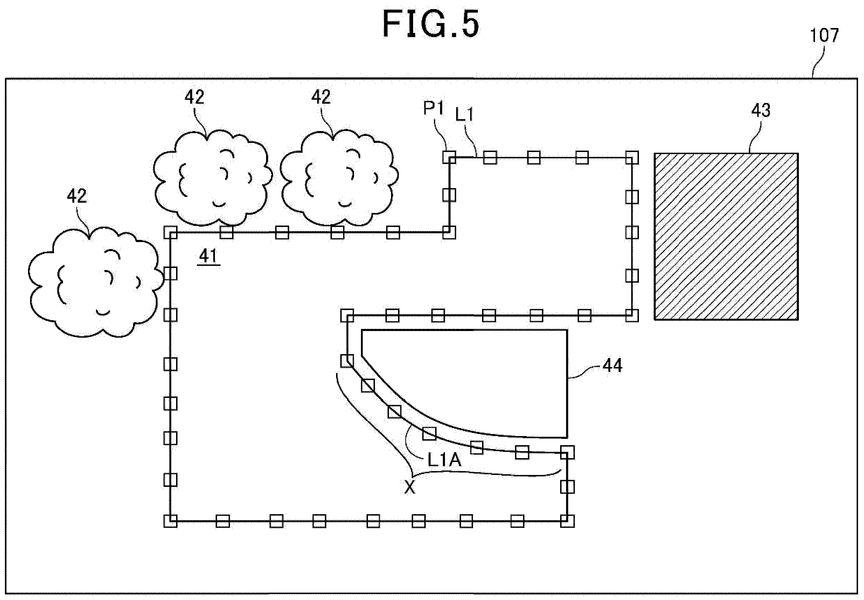

Figure 5 shows a display example of the contour line L1 which is set by step S13. In Figure 5, it is shown that the plurality of positions input by the user (hereinafter, denoted by a reference character P1) and the contour line L1 are overlappingly displayed on the map information 105B including the work target area 41.

For the plurality of positions P1, an input method by user's touch operation on a touch panel is applicable, for example. Furthermore, instead of, or in addition to the method of inputting the plurality of positions P1, other methods including a method by which the user directly inputs the contour line L1 by performing tracing on the touch panel may be applied. For example, for a circular-arc shaped part X which curves along the pond 44 (see Figure 5), the user may directly input a circular-arc shaped contour line L1A by, for example, tracing on the touch panel; alternatively, it may be possible that after the contour line L1 connecting the positions P1 by a linear line is formed, deformation processing for deforming a range corresponding to the part X into the circular-arc shaped contour line L1A is received.

In addition, by displaying the contour line L1 on the display screen 107 as shown in Figure 5, the user can easily confirm whether a desired work target area 41 has been input.

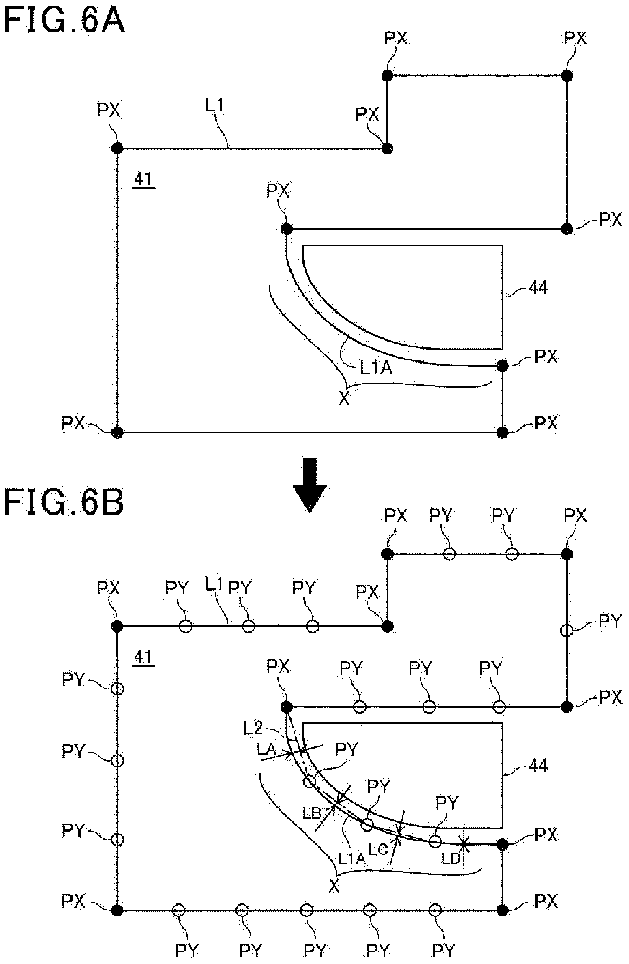

At step S14, the control unit 106 sets main points PX and sub-points PY that are the placement positions of markers 2. Figure 6A and Figure 6B are views provided for describing processing in step S14.

The control unit 106 sets the main points PX at positions where the contour line L1 curves, as shown in Figure 6A; and sets the sub-points PY which are arranged at intervals on the contour line L1 that connects the main points PX, as shown in Figure 6B. In Figure 6A and Figure 6B, the pond 44 is displayed for convenience of description.

The main points PX are set at positions where the curvature angle of the contour line L1 is within a predetermined range (for example, a 30-degree or larger angle), thereby being set at positions corresponding to corner parts of the work target area 41, as shown in Figure 6A. In addition, the sub-points PY are sets at such positions that each of intervals between adjacent markers 2 which are placed at the main points PX and sub-points PY are within a predetermined interval, as shown in Figure 6B. The predetermined interval specifying the positions of the sub-points PY is such an interval that the adjacent markers 2 are arranged within the visual field range of the camera 21 at a distance for which the accuracy of being able to recognize markers 2 with the camera 21 is a predetermined value or higher. This allows the adjacent markers 2 to be recognized with sufficient recognition accuracy from the captured image of the camera 21.

Next, the control unit 106 compares the set contour line L1 and a connecting line L2 that linearly connects the main points PX and the sub-points PY; and when a deviation between the contour line L1 and the connecting line L2 is a predetermined value or more, performs modification processing of modifying the positions of the sub-points PY.

Here, in Figure 6B, parts of the connecting line L2 which do not overlap with the contour line L1 are indicated by an alternate long and short dash line. This connecting line L2 corresponds to the circular-arc shaped part X that curves along the ponds 44 in the work target area 41 and as shown in Figure 6B, separation distances from the contour line L1 are represented by values LA, LB, LC, and LD.

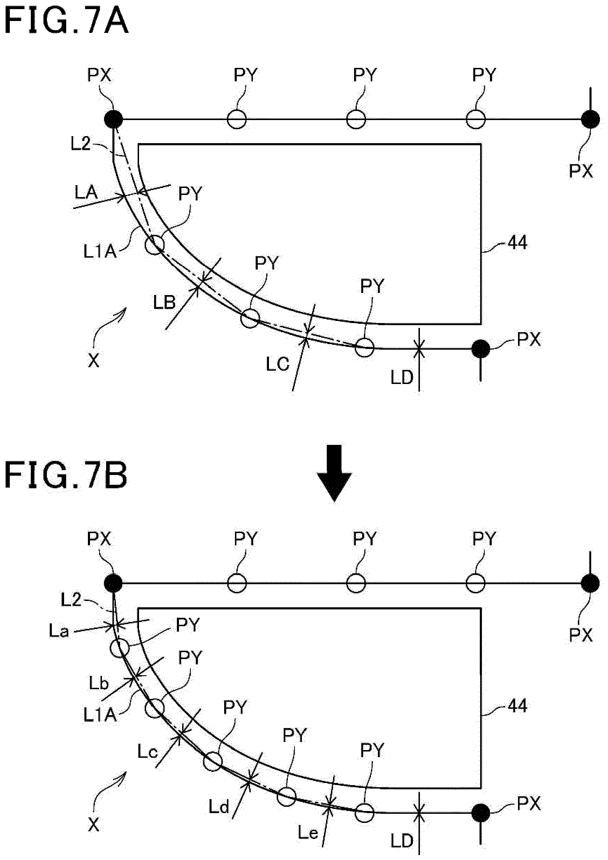

Figure 7A and Figure 7B are views showing one example of the modification processing; and Figure 7B shows the same connecting line L2 as in Figure 6B and Figure 7B shows the connecting line L2 after modification.

In Figure 7A, the values LA, LB, and LC among the values LA, LB, LC, and LD of the separation distance exceed the predetermined value that specifies the deviation. In Figure 7B, for areas corresponding to the separation distance values of LA, LB, and LC, processing of adding new sub-points PY and processing of narrowing separation distances between a main point PX and a sub-point PY and between sub-points PY are performed; and thereby, the values of the separation distances between the connecting line L2 and the contour line L1 are modified to obtain La, Lb, Lc, and Ld which are less than the predetermined value after the processing. Thus, the deviation between the connecting line L2 and the contour line L1 can be reduced; that is, a work target area 41 specified from the positions of the markers 2 by the lawn mower 10 can be correctly defined by the work target area 41 which is set by the user.

It should be noted that processing of setting the above separation distances LA, LB, and LC to less than the predetermined value is not limited to both the processing of adding the sub-points PY and processing of narrowing the separation distances for the points PX and PY, and may be either one of them. In addition, although Figure 7B illustrates a case where the separation distances for the points PX and PY corresponding to the separation distances LA, LB, and LC are equally narrowed, it is not necessarily required to equally narrow them.

Determination of whether the deviation between the contour line L1 and the connecting line L2 is the predetermined value or more is performed by, but not limited to, the above method of performing determination based on the separation distance between the contour line L1 and the connecting line L2. For example, it may be possible that an area between the contour line L1 and the connecting line L2 is calculated and if the calculated area exceeds the predetermined value specifying the deviation, the deviation between the contour line L1 and the connecting line L2 is determined to be the predetermined value or more.

When the main points PX and sub-points PY which are placement positions of the markers 2 are set by processing in step S14, the control unit 106 proceeds to processing of step S15 and displays, on the display unit 103, an image for notifying the placement positions. In this case, by displaying an image indicating the specified placement positions (the positions of main points PX and sub-points PY) on a map image included in the map information, the user can easily specify the placement positions.

It should be noted that as for display in step S15, if it is possible to notify a non-specialist user of the placement positions, any desired display can be applied. Thus, the display unit 103 functions as a notification unit that provides a notification of the placement positions.

In addition, processing in step S15 is not limited to notification using display and may be notification using audio; or it may be possible to transmit information for display or audio to another device (for example, another information processing device such as a tablet carried by the user) and provide a notification of the placement positions by display or audio via the other device. The above is the operation of the placement position specification processing.

As described above, in the embodiment, the control unit 106 specifies the placement positions of the markers 2 that are placement objects, based on the input information specifying the work target area 41 from the user; and provides a notification of the specified placement positions by using the display unit 103, or the like. This allows even a non-specialist to easily know the placement positions of the markers 2, thereby allowing facilitation of placement of the markers 2. In this case, the control unit 106 sets the contour line L1 of the work target area 41 and specifies the placement positions of the markers 2 based on the contour line L1, so that the placement positions of the markers 2 can be specified in accordance with the contour of the work target area 41.

In addition, the control unit 106 sets the main points PX which indicate points where the contour line L1 curves and the sub-points PY which are arranged at intervals on the contour line L1 connecting the main points PX; and specifies the main points PX and sub-points PY as the placement positions of the markers 2. Thus, such a situation can be avoided that due to failure to arrange the markers 2 at points where the contour line L1 curves, an actual work target area 41 is narrowed or enlarged. Furthermore, the sub-points PY are set between the main points PX and thereby, the separation distance of the markers can be set within a predetermined range.

In this case, the control unit 106 sets the sub-points PY at such positions that adjacent markers 2 are arranged within the visual field range of the camera 21 which is used by the lawn mower 10 to detect the markers 2, at a distance for which the accuracy of being able to recognize the markers 2 with the camera 21 is a predetermined value or higher, so that the separation distance of the markers 2 can be properly set according to the camera 21 and the lawn mower 10 can be prevented from moving outside the work target area 41 through between the markers 2.

In addition, the control unit 106 compares the set contour line L1 and the connecting line L2 that linearly connects the main points PX and the sub-points PY which are the specified placement positions of the markers 2; and when deviation between the contour line L1 and the connecting line L2 is a predetermined value or more, performs modification processing of modifying the placement positions of the markers 2; and provides a notification of the modified placement positions to the display unit 103, or the like. Thus, the work target area 41 can be more accurately defined by the markers 2.

In addition, the display unit 103 displays an image in which the specified placement positions (the positions of main points PX and sub-points PY) are shown, on a map image included in the map information 105B, the user can easily specify the placement positions. Furthermore, since the map information 105B is used, a current position where the position detection unit 104 included in the information processing device 100 is used can also be easily displayed in the map image. In this case, for example, by displaying both the placement positions (the positions of the main points PX and sub-points PY) and the current position of the information processing device 100 (corresponding to the position of the user) in the map image, the placement positions are more easily specified.

In the above embodiment, description has been made regarding a case in which as the modification processing of modifying the placement positions of the markers 2, the processing of setting a deviation between the connecting line L2 that connects the specified placement positions of the markers 2 and the contour line L1 to a predetermined value or less is performed; however, it is not limited thereto. For example, the control unit 106 may obtain information on at least any of the building 43 and topography inside or outside the work target area 41 from the map information 105B and execute other modification processing of modifying the placement positions of the markers 2 based on the obtained information.

Specifically, it may be possible to obtain, as information on the building 43, information that allows the contour of the building 43 to be specified; and automatically set, based on this information, at least any of main points PX and sub-points PY which are the placement positions of markers 2 along the contour of the building 43, while avoiding the building 43. Alternatively, the building may be specified by image recognition from the map image.

In addition, it may be possible to obtain, as topology information, information that allows the specification of at least any of the existence of the trees 42 or pond 44, and the topography of a steep slope, valley, or the like where the lawn mower 10 cannot travel; and, based on this information, automatically set at least any of main points PX and sub-points PY which are the placement positions of the markers 2, which points are arranged along a periphery of the trees 42, the pond 44, the steep slope and the valley, and avoid at least any of the trees 42, the pond 44, the steep slope and the valley. Also, in this case, the trees 42, the pond 44, and the like may be specified by image recognition from the map image.

According to the other modification processing, the work target area 41 can be automatically set in accordance with the building and topography and even a user without expertise easily sets the work target area 41 properly. In addition, a threshold value which is used to determine whether the contour line L1 and the connecting line L2 deviate from each other may be changed according to topography information. For example, when there is a deviation between the contour line L1 and the connecting line L2 in the vicinity of the pond 44, the threshold value may be lowered to increase the placement positions of markers 2 in order to suitably prevent the lawn mower 10 from falling into the pond 44.

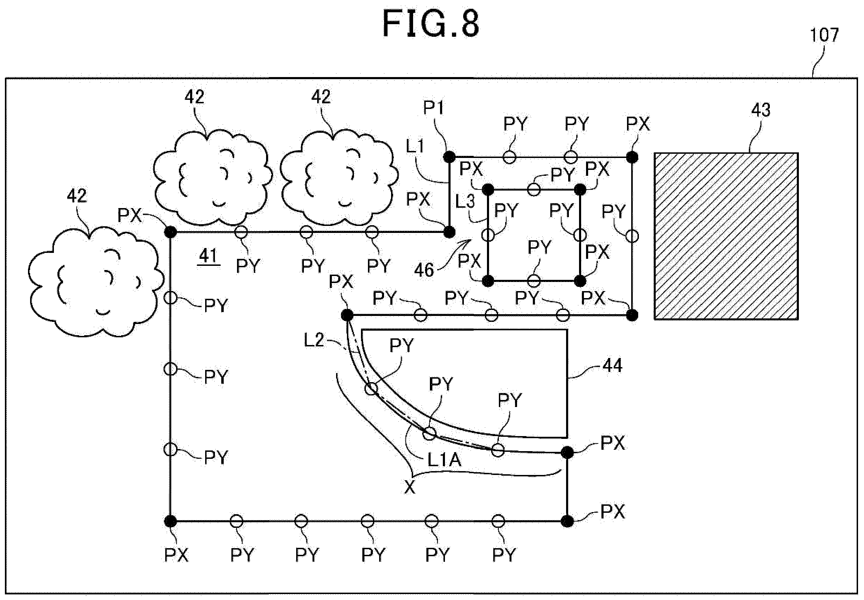

Furthermore, as shown in Figure 8, it may be possible to perform the processing of: receiving other input information that specifies an area not requiring work 46 in the work target area 41, via the operation unit 102; and the control unit 106 setting a contour line L3 of the area not requiring work 46 based on the other input information and specifying main points PX and sub-points PY which are the placement positions of markers 2 based on the contour line L3. Thus, the area not requiring work 46 is easily set.

Incidentally, there is a possibility that markers 2 are erroneously placed at positions different from main points PX and sub-points PY even when the main points PX and sub-points PY are specified by the placement position specification processing. Therefore, this placement position notification system 1 may include a configuration of verifying whether the markers 2 have been placed at the specified main points PX and sub-points PY.

In this case, the control unit 106 of the information processing device 100 executes, based on a user's instruction: first processing of causing the lawn mower 10 to execute verification traveling for performing verification of the positions of the markers 2; and second processing of specifying the positional deviation amounts of the markers 2 based on a result of the verification of the lawn mower 10 and providing information on the specified deviation amounts by display or audio.

The first processing is, for example, such that the control unit 106 transmits an instruction for verification traveling to the lawn mower 10 through the communication unit 101. It should be noted that in performing the first and second processing, the communication unit 101 is assumed to include a communication function which communicates with the lawn mower 10. A method for the communication may be either wireless communication or wired communication; and a communication system is also not limited.

The lawn mower 10 having received the instruction for verification traveling, under control of the electrical unit 30, drives a traveling motor 15 based on the instruction for verification traveling, to start traveling; and starts the processing of specifying the positions of the markers 2 with the camera 21. In this case, the lawn mower 10 continues traveling by using the positions of the detected markers 2 and thereby, detects all the markers 2 as much as possible that are arranged along the work target area 41. It should be noted that it is preferable that during this verification traveling, the work part driving motor 16 is not driven and work (lawn mowing) is not performed.

When specification of the positions of the markers 2 is completed, the electrical unit 30 of the lawn mower 10 stops the lawn mower 10 and transmits information indicating the specified positions of the markers 2 to the information processing device 100, by using the communication function. In the information processing device 100, the control unit 106 compares the positions of the markers 2 which are specified by the lawn mower 10 with the main points PX and sub-points PY which are specified by the placement position specification processing; and calculates the positional deviation amounts of the markers 2 by an operation. Subsequently, the control unit 106 performs the processing of notifying the user by display or audio of markers 2 whose positional deviation amounts exceed a predetermined allowable range.

Thus, when markers 2 are not placed at the specified main points PX and sub-points PY, the movement, addition, or the like of markers 2 can be encouraged.

In the above embodiment, description has been made regarding a case in which the placement objects indicating the work target area 41 are markers 2; however, they are not limited to the markers 2. Placement objects other than the markers 2 include beacons, for example. In addition, the markers 2 are not limited to those of a single type; and special markers that provide predetermined information to the lawn mower 10 may be placed. The special markers include, for example, shed markers that indicate the position of a shed for housing the lawn mower 10, return direction markers that indicate the return direction, and narrow path markers that indicate a narrow traveling path. Arrangement of any of the markers may be performed by user's manual input during the placement position specification processing; alternatively, may be automatically set by the control unit 106 according to the work target area 41.

In addition, in the above embodiment, description has been made regarding a case in which the information processing device 100 performs the placement position notification processing; however, the lawn mower 10 may be provided with a configuration necessary for the placement position notification processing and the lawn mower 10 may perform the placement position notification processing.

In addition, in the above embodiment, description has been made regarding a case in which the placement objects indicating the work target area 41 are markers 2; however, they are not limited to the markers 2. Placement objects other than the markers 2 include beacons, for example. In the case of beacons, a beacon receiver (corresponding to a sensor that detects the placement objects) instead of the camera 21 may be provided.

Further, description has been made regarding a case in which the present invention is applied to the placement position notification system 1 for the lawn mower 10; however, not limited to this, the present invention can be applied to a placement position notification system for autonomous traveling work machines including other than the lawn mower 10. In addition, the above embodiment is merely one embodiment of the present invention, and any modification and application are possible without departing from the gist of the present invention.

### [Reference Signs List]

1 placement position notification system, 2 marker (placement object), 10 robot lawn mower, 21 camera (sensor), 41 work target area, 42 tree, 43 building, 44 pond, 100 information processing device, 101 communication unit (information acquisition unit), 102 operation unit (input unit), 103 display unit (notification unit), 104 position detection unit, 105 storage unit, 105A control program, 105B map information, 106 control unit (position specifying unit), L1, L1A contour line, L2 connecting line, PX main point, PY sub-point

## Claims

1. A placement position notification system (1) configured to provide a notification of placement positions of placement objects (2) indicating a work target area (41) of an autonomous traveling work machine (10),
the placement position notification system comprising:
an information acquisition unit (101) configured to obtain image information including the work target area, **characterized by** comprising:
an input unit (102) configured to receive input information corresponding to the image information, the input information specifying the work target area;
a position specifying unit (106)configured to specify the placement positions of the placement objects (2) based on the input information; and
a notification unit (103) configured to provide a notification of the specified placement positions.

2. The placement position notification system (1) according to claim 1, wherein
the position specifying unit (106) is configured to set a contour line (L1, L1A) of the work target area (41) based on the input information and to specify the placement positions of the placement objects (2) based on the contour line.

3. The placement position notification system (1) according to claim 2, wherein
the position specifying unit (106) is configured to set main points (PX) and sub-points (PY), the main points (PX) indicating positions where the contour line (L1, L1A) curves, the sub-points (PY) being arranged at intervals on the contour line (L1, L1A) connecting the main points (PX); and is configured to specify the main points (PX) and sub-points (PY) as the placement positions of the placement objects (2).

4. The placement position notification system (1) according to claim 3, wherein
the position specifying unit (106) is configured to set the sub-points (PY) at such positions that adjacent placement objects are arranged within a visual field range of a camera (21), at a distance for which an accuracy of being able to recognize the placement objects (2) with the camera (21) is a predetermined value or higher, the camera (21) being used by the autonomous traveling work machine (10) to detect the placement objects (2).

5. The placement position notification system (1) according to any one of claims 2 to 4, wherein
the position specifying unit (106) is configured to compare the set contour line (L1, L1A) and a connecting line (L2) that linearly connects the specified placement positions of the placement objects (2); and is configured to perform, if a deviation between the contour line (L1, L1A) and the connecting line (L2) is a predetermined value or more, modification processing of modifying the placement positions of the placement objects (2), and the notification unit (103) is configured to provide a notification of the modified placement positions.

6. The placement position notification system (1) according to any one of claims 2 to 5, wherein
the input unit (102) is configured to receive other input information that specifies an area not requiring work (46) in the work target area (41); and
the position specifying unit (106) is configured to set a contour line (L3) of the area not requiring work (46) based on the other input information, and to specify placement positions of the placement objects (2) based on the contour line (L3).

7. The placement position notification system (1) according to any one of claims 1 to 6, wherein
the position specifying unit (106) is configured to obtain information on at least any of a building (43) and a topography from the image information and to perform modification processing of modifying the placement positions of the placement objects (2) based on the obtained information.

8. The placement position notification system (1) according to any one of claims 1 to 7, wherein
the placement position notification system (1) comprising:
a control unit (106) that is configured to perform:
processing of causing the autonomous traveling work machine (10) to execute verification traveling for performing verification of the positions of the placement objects (2); and
processing of determining positional deviation amounts of the placement objects (2) based on a result of the verification by the autonomous traveling work machine (10) and causing the notification unit (103) to provide a notification of information on the deviation amounts.

9. The placement position notification system (1) according to any one of claims 1 to 8, wherein
the image information is map information (105B); and
the notification unit (103) is configured to display an image indicating the specified placement positions, on a map image included in the map information (105B).

## Patentansprüche

1. Platzierungspositionsmeldesystem (1), das konfiguriert ist, um eine Meldung von Platzierungspositionen von Platzierungsobjekten (2) bereitzustellen, die eine Soll-Arbeitsfläche (41) einer autonom fahrenden Arbeitsmaschine (10) angeben,
wobei das Platzierungspositionsmeldesystem aufweist:
eine Informationserfassungseinheit (101), die konfiguriert ist, um die Soll-Arbeitsfläche enthaltende Bildinformation zu beschaffen, **dadurch gekennzeichnet, dass** es aufweist:
eine Eingabeeinheit (102), die konfiguriert ist, um der Bildinformation entsprechende Eingabeinformation zu empfangen, wobei die Eingabeinformation die Soll-Arbeitsfläche spezifiziert;
eine Positionsspezifiziereinheit (106), die konfiguriert ist, um die Platzierungspositionen der Platzierungsobjekte (2) basierend auf der Eingabeinformation zu spezifizieren; und
eine Meldeeinheit (103), die konfiguriert ist, um eine Meldung der spezifizierten Platzierungspositionen bereitzustellen.

2. Das Platzierungspositionsmeldesystem (1) nach Anspruch 1, wobei die Positionsspezifiziereinheit (106) konfiguriert ist, um eine Konturlinie (L1, L1A) der Soll-Arbeitsfläche (41) basierend auf der Eingabeinformation zu setzen, und um die Platzierungspositionen der Platzierungsobjekte (2) basierend auf der Konturlinie zu spezifizieren.

3. Das Platzierungspositionsmeldesystem (1) nach Anspruch 2, wobei die Positionsspezifiziereinheit (106) konfiguriert ist, um Hauptpunkte (PX) und Unterpunkte (PY) zu setzen, wobei die Hauptpunkte (PX) Positionen angeben, wo die Konturlinie (L1, L1A) gekrümmt ist, die Unterpunkte (PY) mit Intervallen auf der die Hauptpunkte (PX) verbindende Konturlinie (L1, L1A) angeordnet sind; und konfiguriert ist, um die Hauptpunkte (PX) und die Unterpunkte (PY) als die Platzierungspositionen der Platzierungsobjekte (2) zu spezifizieren.

4. Das Platzierungspositionsmeldesystem (1) nach Anspruch 3, wobei die Positionsspezifiziereinheit (106) konfiguriert ist, um die Unterpunkte (PY) auf solche Positionen zu setzen, dass benachbarte Platzierungsobjekte innerhalb eines Sichtfeldbereichs einer Kamera (21) mit einem Abstand angeordnet sind, für den eine Genauigkeit, um die Platzierungsobjekte (2) mit der Kamera (21) erkennen zu können, ein vorbestimmter Wert oder höher ist, wobei die Kamera (21) von der autonom fahrenden Arbeitsmaschine (10) dazu benutzt wird, die Platzierungsobjekte (2) zu detektieren.

5. Das Platzierungspositionsmeldesystem (1) nach einem der Ansprüche 2 bis 4, wobei
die Positionsspezifiziereinheit (106) konfiguriert ist, um die gesetzte Konturlinie (L1, L1A) mit einer Verbindungslinie (L2) zu vergleichen, die die spezifizierten Platzierungsinformationen der Platzierungsobjekte (2) linear verbindet; und konfiguriert ist, um, wenn eine Abweichung zwischen der Konturlinie (L1, L1A) und der Verbindungslinie (L2) ein vorbestimmter Wert oder größer ist, einen Modifikationsprozess durchzuführen, um die Platzierungspositionen der Platzierungsobjekte (2) zu modifizieren, und die Meldeeinheit (103) konfiguriert ist, um eine Meldung der modifizierten Platzierungspositionen bereitzustellen.

6. Das Platzierungspositionsmeldesystem (1) nach einem der Ansprüche 2 bis 5, wobei
die Eingabeeinheit (102) konfiguriert ist, um andere Eingabeinformation zu empfangen, die in der Soll-Arbeitsfläche (41) eine keine Arbeit benötigende Fläche (46) spezifiziert; und
die Positionsspezifiziereinheit (106) konfiguriert ist, um eine Konturlinie (L3) der keine Arbeit benötigenden Fläche (46) basierend auf der anderen Eingabeinformation zu setzen, und um Platzierungspositionen der Platzierungsobjekte (2) basierend auf der Konturlinie (L3) zu spezifizieren.

7. Das Platzierungspositionsmeldesystem (1) nach einem der Ansprüche 1 bis 6, wobei
die Positionsspezifiziereinheit (106) ferner konfiguriert ist, um Information über ein Gebäude (43) und/oder eine Topografie aus der Bildinformation zu beschaffen und um einen Modifikationsprozess zum Modifizieren der Platzierungspositionen der Platzierungsobjekte (2) basierend auf der beschafften Information durchzuführen.

8. Das Platzierungspositionsmeldesystem (1) nach einem der Ansprüche 1 bis 7, wobei
das Platzierungspositionsmeldesystem (1) aufweist:
eine Steuereinheit (106), die konfiguriert ist zum Durchführen:
eines Prozesses zum Veranlassen, dass die autonom fahrende Arbeitsmaschine (10) eine Verifizierungsfahrt ausführt, um eine Verifizierung der Positionen der Platzierungsobjekte (2) durchzuführen; und
eines Prozesses zum Bestimmen von Positionsabweichungsbeträgen, in der Platzierungsobjekte (2) basierend auf einem Ergebnis der Verifizierung durch die autonom fahrende Arbeitsmaschine (10), und Veranlassen, dass die Meldeeinheit (103) eine Meldung von Information zu den Abweichungsbeträgen bereitstellt.

9. Das Platzierungspositionsmeldesystem (1) nach einem der Ansprüche 1 bis 8, wobei
die Bildinformation Karteninformation (105B) ist; und
die Meldeeinheit (103) konfiguriert ist, um auf einer in der Karteninformation (105B) enthaltenen Kartenbild ein Bild anzuzeigen, dass die spezifizierten Platzierungspositionen angibt.

## Revendications

1. Système de notification de position de placement (1) configuré pour fournir une notification de positions de placement d'objets de placement (2) indiquant une zone cible de travail (41) d'une machine de travail à déplacement autonome (10),
le système de notification de position de placement comprenant :
une unité d'acquisition d'information (101) configurée pour obtenir une information d'image comportant la zone cible de travail, **caractérisé par le fait qu'**il comprend :
une unité d'entrée (102) configurée pour recevoir une information d'entrée correspondant à l'information d'image, l'information d'entrée spécifiant la zone cible de travail ;
une unité de spécification de position (106) configurée pour spécifier les positions de placement des objets de placement (2) sur la base de l'information d'entrée ; et
une unité de notification (103) configurée pour fournir une notification des positions de placement spécifiées.

2. Système de notification de position de placement (1) selon la revendication 1, dans lequel
l'unité de spécification de position (106) est configurée pour définir une ligne de contour (L1, L1A) de la zone cible de travail (41) sur la base de l'information d'entrée et pour spécifier les positions de placement des objets de placement (2) sur la base de la ligne de contour.

3. Système de notification de position de placement (1) selon la revendication 2, dans lequel
l'unité de spécification de position (106) est configurée pour définir des points principaux (PX) et des sous-points (PY), les points principaux (PX) indiquant des positions où la ligne de contour (L1, L1A) s'incurve, les sous-points (PY) étant agencés par intervalles sur la ligne de contour (L1, L1A) reliant les points principaux (PX) ; et est configurée pour spécifier les points principaux (PX) et les sous-points (PY) comme étant les positions de placement des objets de placement (2).

4. Système de notification de position de placement (1) selon la revendication 3, dans lequel
l'unité de spécification de position (106) est configurée pour définir les sous-points (PY) à des positions telles que des objets de placement adjacents soient agencés au sein d'une portée de champ visuel d'un appareil de prise de vues (21), à une distance pour laquelle une précision d'aptitude à reconnaître les objets de placement (2) avec l'appareil de prise de vues (21) est une valeur prédéterminée ou supérieure, l'appareil de prise de vues (21) utilisé par la machine de travail à déplacement autonome (10) pour détecter les objets de placement (2).

5. Système de notification de position de placement (1) selon l'une quelconque des revendications 2 à 4, dans lequel
l'unité de spécification de position (106) est configurée pour comparer la ligne de contour (L1, L1A) définie et une ligne de liaison (L2) qui relie de manière linéaire les positions de placement spécifiées des objets de placement (2) ; et est configurée pour réaliser, si un écart entre la ligne de contour (L1, L1A) et la ligne de liaison (L2) est une valeur prédéterminée ou plus, un traitement de modification consistant à modifier les positions de placement des objets de placement (2), et l'unité de notification (103) est configurée pour fournir une notification des positions de placement modifiées.

6. Système de notification de position de placement (1) selon l'une quelconque des revendications 2 à 5, dans lequel
l'unité d'entrée (102) est configurée pour recevoir une autre information d'entrée qui spécifie une zone ne nécessitant pas de travail (46) dans la zone cible de travail (41) ; et
l'unité de spécification de position (106) est configurée pour définir une ligne de contour (L3) de la zone ne nécessitant pas de travail (46) sur la base de l'autre information d'entrée, et pour spécifier des positions de placement des objets de placement (2) sur la base de la ligne de contour (L3).

7. Système de notification de position de placement (1) selon l'une quelconque des revendications 1 à 6, dans lequel
l'unité de spécification de position (106) est configurée pour obtenir une information sur au moins l'un quelconque parmi un bâtiment (43) et une topographie à partir de l'information d'image et pour réaliser un traitement de modification consistant à modifier les positions de placement des objets de placement (2) sur la base de l'information obtenue.

8. Système de notification de position de placement (1) selon l'une quelconque des revendications 1 à 7, dans lequel
le système de notification de position de placement (1) comprenant :
une unité de commande (106) qui est configurée pour réaliser :
un traitement consistant à amener la machine de travail à déplacement autonome (10) à exécuter un déplacement de vérification pour la réalisation d'une vérification des positions des objets de placement (2) ; et
un traitement consistant à déterminer des quantités d'écart de position des objets de placement (2) sur la base d'un résultat de la vérification par la machine de travail à déplacement autonome (10) et à amener l'unité de notification (103) à fournir une notification d'information sur les quantités d'écart.

9. Système de notification de position de placement (1) selon l'une quelconque des revendications 1 à 8, dans lequel
l'information d'image est une information cartographique (105B) ; et
l'unité de notification (103) est configurée pour afficher une image indiquant les positions de placement spécifiées, sur une image cartographique comprise dans l'information cartographique (105B).
